# EUROPEAN PATENT SPECIFICATION

(11) **EP 2 706 305 B1**
(45) Date of publication and mention of the grant of the patent: **09.12.2015**
(21) Application number: 13183829.4
(22) Date of filing: 11.09.2013
(51) Int. Cl.: F24F 13/28, F24F 13/20, F24F 12/00

(54) **Heat recovery unit for controlled mechanical ventilation systems**
Wärmerückgewinnungsanlage für kontrollierte mechanische Lüftungsanlagen
Installation de récupération de chaleur pour un dispositif de ventilation mécanique contrôlée

(30) Priority: 11.09.2012 ES 201231405
(43) Date of publication of application: 12.03.2014
(73) Proprietor: Soler & Palau Research, S.L., 08150 Parets del Vallés (Barcelona) (ES)
(72) Inventor: Bach-Esteve Burch, Albert, 08150 Parets del Vallès (Barcelona) (ES)
(74) Representative: Intès, Didier Gérard André

(56) References cited:
- EP-A1- 2 400 232
- WO-A1-2011/142091
- FR-A1- 2 864 607
- US-A1- 2005 236 150

## Description

### Field of the Art

The present invention relates to interior air conditioning in buildings, proposing a heat recovery unit in which two circulation circuits for the circulation of air are connected to one another for heat transfer between them, with features which allow establishing the circulation circuits for the circulation of air in selective combinations between end inlets and outlets, for the adaptation of the assembly of application to the circulation conduits for the circulation of air with respect to which connection must be established in the installation site.

### State of the Art

Systems which allow extracting air from the interior and introducing air from the exterior, heating or cooling the introduced external air to maintain the temperature inside the building of application within a comfort range, are used for interior air conditioning in buildings.

To maintain the interior thermal level in enclosures, air heating systems, such as unit heaters, air heaters or heating systems, as well as air cooling systems, such as air conditioning systems, and systems which allow both heating and cooling the air, such as heat pumps, are known.

All these systems are efficient for the interior ambient thermal conditioning function, but they entail high energy consumption, the use thereof resulting in a high cost, in addition to the fact that they generally produce emissions that are harmful to the environment.

Due to those drawbacks, systems which allow interior air conditioning have been developed as an alternative, reducing the necessary energy consumption by means of exploiting the thermal conditions of the actual air extracted from the interior in the conditioning process, determining a relationship which allows providing those thermal conditions to the fresh air introduced from the exterior.

To that end, a known system for exploiting the heat or cold of the air extracted from the interior comprises a heat recovery unit having a heat exchanger, in which respective incoming and outgoing conditioning air circuits are connected to but not mixed with one another, incorporating air cleaning filters in the inlets of the circuits for protecting the heat exchanger from dirt; on the other hand, fans being arranged at the outlets of the circuits for driving the airflows. The air introduced from the exterior is thus acclimatized by the influence of the thermal conditions of the air extracted from the interior, thus heating or cooling the conditioning air introduced from the exterior, depending on the temperature difference between the interior and the exterior of the enclosure of application.

In conventional embodiments of heat recovery units used for said function, the incoming and outgoing airflow cleaning filters are securely arranged inside the body of the exchanger at the respective inlets of both circulation circuits for the circulation of air, which determines the position for assembling the heat recovery unit in the conduits for the entrance and exit of air extracted from the interior of the enclosure of application and for air introduced from the exterior, the assembly being difficult depending on the space available, and furthermore the placement position may not be the most suitable for draining the condensed water produced in the heat recovery unit. US 2005/0236150 discloses a heat unit according to the preamble of appending claim 1.

### Object of the Invention

The present invention proposes a heat recovery unit for controlled mechanical ventilation systems, comprising a heat exchanger in which an air circuit with air coming from outside the enclosure of application and an air circuit with air extracted from inside the enclosure are connected to but not communicated with one another, with features that allow selectively adapting the inlets and outlets of said incoming and circulation circuits for the circulation of outgoing air to the arrangement of the coupling conduits in the system of application.

This heat recovery unit object of the invention comprises a casing internally housing the heat exchanger in which the circulation circuits for the circulation of air extracted from inside the enclosure of application and for air introduced from outside the enclosure are connected to one another, incorporating in said circuits respective airflow cleaning filters to prevent dirt entrained by said airflows from reaching the heat exchanger.

According to the invention, the casing of the heat recovery unit establishes housings which open to the exterior for inserting the airflow cleaning filters for cleaning the airflows circulating through the interior, there being one such housing at each of the ends of the circulation circuits for the circulation of air.

A heat recovery unit which allows selectively adapting any of the ends of each of the circulation circuits for the circulation of air as an inlet by means of inserting the corresponding filter in the respective housing connected to the end to be defined as the inlet in each of said circulation circuits for the circulation of air is thus obtained.

Therefore, the heat recovery unit allows connecting the assembly to the intended air circulation conduits in the application site using any of the end mouths of the circulation circuits for the circulation of airflows through the interior of the heat exchanger as inlets and outlets of the circuits for incoming fresh air and for extracted air to be refreshed, the placement of the heat recovery unit thus being able to be adapted in the most suitable manner according to the space available and to the situation of the air circulation conduits to which it must be coupled.

Therefore, the installation of the heat recovery unit is greatly simplified, allowing a more direct coupling with the air circulation conduits of the system of application to prevent bent sections, which allows reducing the space necessary for installation and prevents airflow retentions, favoring circulation.

The possibility of selectively adapting the position of the heat exchanger further allows placing same in the most suitable manner to favor draining the water resulting from condensation produced inside the heat exchanger, the casing having holes for that purpose acting as overflow holes for drainage.

Based on the foregoing, said heat recovery unit object of the invention has very advantageous features, acquiring its own identity and preferred character for the function of heat exploitation in air conditioning systems by means of extracting air from interiors to be conditioned and introducing air from the exterior.

### Description of the Drawings

Figure 1 shows a diagram of a conventional heat recovery unit with the driving fans for driving airflows integrated therein.
Figure 2 shows a diagram of a conventional heat recovery unit with the driving fans for driving airflows arranged outside the body of the heat exchanger.
Figure 3 shows a perspective view of a heat recovery unit made according to the invention.
Figure 4 and 5 show respective top views of said heat recovery unit of the invention with respective different configurations for the arrangement of the inlets and outlets of the air circuits.
Figure 6 shows a side view of a heat recovery unit according to the invention in the assembly phase using a system of securing with clamping strips.
Figure 7 is a correlative view of the preceding figure with the heat recovery unit secured by means of the system of securing with clamping strips.

### Detailed Description of the Invention

The object of the invention relates to a heat recovery unit for controlled mechanical ventilation systems of the type which establishes a connection between an airflow extracted from an enclosure to be conditioned and an airflow introduced into the enclosure from the exterior, without communication between both airflows.

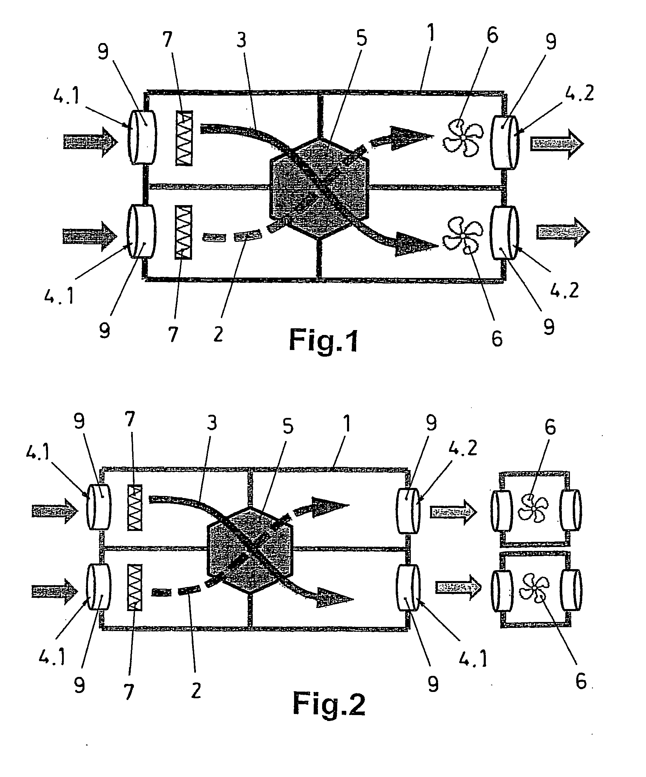

As seen in Figures 1 and 2, such heat recovery unit comprises a casing (1) internally establishing two circulation circuits for the circulation of airflows (2 and 3) between respective inlets (4.1) and respective outlets (4.2) passing through a heat exchanger (5) arranged inside the mentioned casing (1), such that both circuits are communicated in said heat exchanger (5) without the airflows (2 and 3) being mixed together, heat transmission being established between them.

To force the circulation of airflows (2 and 3), fans (6) are arranged in the respective circuits at the outlets (4.2) of the circulation conduits for circulation through the heat exchanger, said fans (6) being able to be integrated inside the casing (1) of the heat exchanger according to the embodiment of Figure 1, or in an external arrangement according to the embodiment of Figure 2, to prevent the generation of noise inside the heat exchanger.

Respective filters (7) are further arranged in the circulation circuits for the circulation of airflows (2 and 3) for cleaning the airflows (2 and 3), such that dirt entrained by the airflows does not reach the heat exchanger (5), thus preventing said heat exchanger (5) from losing effectiveness due to dirt accumulation thereon. For that purpose, the mentioned filters (7) are arranged in the inlets (4.1) of the circulation circuits for the circulation of airflows (2 and 3), so that in each case, the dirt is retained before reaching the heat exchanger (5).

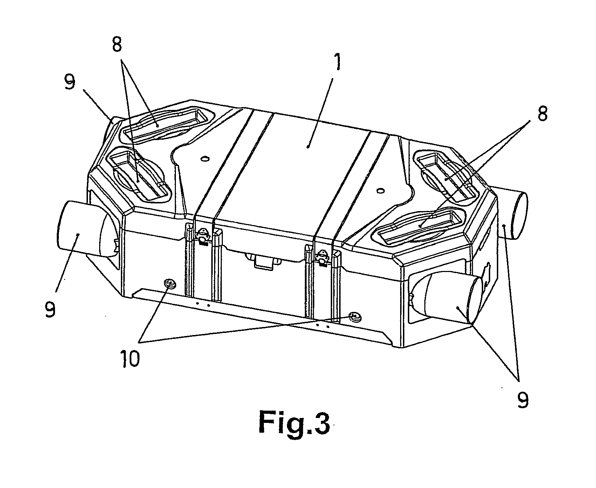

According to the invention, housings (8) for inserting the filters (7) are envisaged in the casing (1), said housings (8) being open to the exterior and there being a housing (8) in each of the openings (9) of the casing (1) through which the inlets (4.1) or outlets (4.2) of the circulation circuits for the circulation of airflows (2 and 3) through the interior are established, as seen in Figure 3.

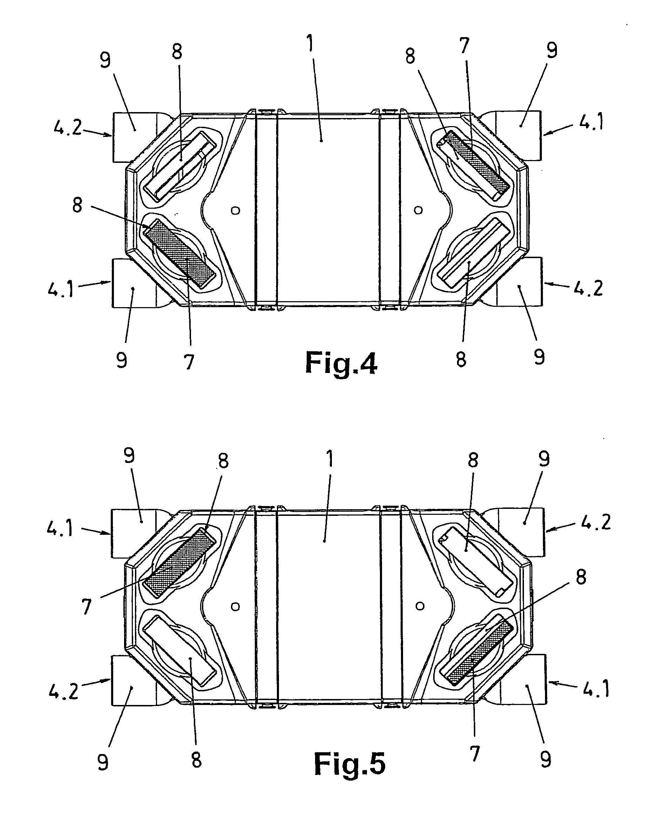

The filters (7) can thus be introduced into and extracted from the housings (8), the filters (7) being able to be placed in a replaceable manner in any of said housings (8) which allows selectively establishing the different openings (9) as inlets (4.1) or outlets (4.2) of the circulation circuits for the circulation of airflows (2 and 3), placing filters (7) in the housings (8) corresponding with the openings (9) intended for acting as the inlets (4.1) of said circulation circuits for the circulation of airflows (2 and 3), as seen in Figures 4 and 5, without these depicted arrangements being limiting.

This allows selectively establishing an arrangement of the heat recovery unit such that it corresponds with the situation of the conduits for the entrance and exit of the air flow (2) extracted from the enclosure to be conditioned and of the airflow (3) introduced from the exterior, thus facilitating installation and exploiting the space in the site of application, as well as eliminating elbows in the attachments to the coupling conduits which may complicate the circulation of airflows (2 and 3).

Selectively establishing the arrangement of the inlets (4.1) and outlets (4.2) for the circulation of airflows (2 and 3) further allows the adaptation for placing the heat recovery unit in its installation of application in the most suitable manner to facilitate draining the water resulting from the condensation produced due to temperature differences in the airflows (2 and 3), the casing (1) having holes (10) that act as overflow holes for drainage.

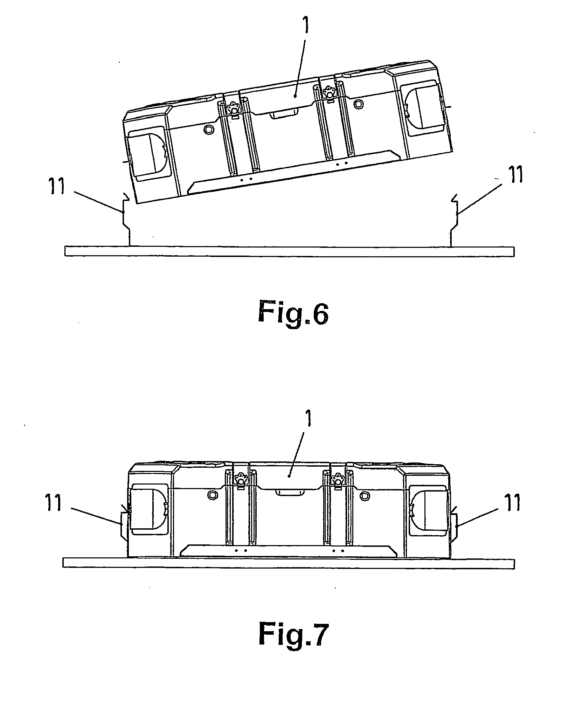

In the installation of application, the heat recovery unit can be secured by any conventional means, a system of securing by means of clamping strips (11) fixed in the installation site, as seen in Figures 6 and 7, which allows a quick installation assembly being particularly envisaged. However, this securing solution is only a practical embodiment which has no limiting character.

## Claims

1. A heat recovery unit for controlled mechanical ventilation systems comprising a casing (1) internally housing a heat exchanger (5), establishing between openings (9) two circulation circuits for the circulation of airflows (2 and 3) which are connected to but not mixed with one another in the heat exchanger (5), **characterized in that** in each of the openings (9), the casing (1) has housings (8) which open to the exterior, where air cleaning filters (7) can be inserted and removed for selectively establishing the openings (9) intended for acting as the inlets (4.1) of the circulation circuits for the circulation of airflows (2 and 3), in order to facilitate placing the heat recovery unit in the installation site and draining the condensation produced therein.

2. The heat recovery unit for controlled mechanical ventilation systems according to claim 1, **characterized in that** the casing (1) has overflow holes (10) for drainage.

## Patentansprüche

1. Wärmerückgewinnungsanlage für gesteuerte mechanische Ventilationssysteme, die einen Behälter (1) umfasst, in dem sich ein Wärmetauscher (5) befindet, der zwischen Öffnungen (9) zwei Zirkulationskreisläufe zur Zirkulation von Luftströmungen (2 und 3), die im Wärmetauscher (5) miteinander verbunden, aber nicht vermischt werden, aufbaut **dadurch gekennzeichnet, dass** der Behälter (1) in jeder der Öffnungen (9) Gehäuse (8) aufweist, die zur Außenseite hin offen sind, wo Luftreinigungsfilter (7) eingebracht und entfernt werden können, um gezielt die Öffnungen (9) festzulegen, die als Einlass (4.1) für die Zirkulationskreisläufe zur Zirkulation von Luftströmungen (2 und 3) dienen sollen, um die Platzierung der Wärmerückgewinnungsanlage am Aufstellungsort zu erleichtern und das in ihr erzeugte Kondenswasser abfließen zu lassen.

2. Wärmerückgewinnungsanlage für gesteuerte mechanische Ventilationssysteme nach Anspruch 1, **dadurch gekennzeichnet, dass** der Behälter (1) Überlauflöcher (10) zur Wasserabführung aufweist.

## Revendications

1. Unité de récupération de chaleur pour des systèmes de ventilation mécanique commandés comportant un boîtier (1) renfermant à l'intérieur un échangeur de chaleur (5), établissant entre des ouvertures (9) deux circuits de circulation pour la circulation d'écoulements d'air (2 et 3) qui sont reliés mais pas mélangés l'un à l'autre dans l'échangeur de chaleur (5), **caractérisée en ce que**, dans chacune des ouvertures (9), le boîtier (1) a des logements (8) qui s'ouvrent sur l'extérieur, où des filtres à air (7) peuvent être insérés et enlevés pour établir de manière sélective les ouvertures (9) prévues pour agir en tant qu'entrées (4.1) des circuits de circulation pour la circulation des écoulements d'air (2 et 3), afin de faciliter la mise en place de l'unité de récupération de chaleur dans le site d'installation et la vidange de la condensation produite à l'intérieur.

2. Unité de récupération de chaleur pour des systèmes de ventilation mécanique commandés selon la revendication 1, **caractérisée en ce que** le boîtier (1) a des trous de débordement (10) pour la vidange.
